# EUROPEAN PATENT SPECIFICATION

(11) **EP 3 412 550 B1**
(45) Date of publication and mention of the grant of the patent: **15.05.2019**
(21) Application number: 17181536.8
(22) Date of filing: 14.07.2017
(51) Int. Cl.: B62M 1/28, B62M 1/20, B62M 1/24

(54) **VEHICLE**
FAHRZEUG
VÉHICULE

(30) Priority: 09.06.2017 UA 201705689
(43) Date of publication of application: 12.12.2018
(73) Proprietor: Krykun, Gennadii Pavlovych, Kharkiv 61017 (UA); Fedotov, Serhii Oleksiyovych, Kharkiv 61017 (UA)
(72) Inventor: Krykun, Gennadii Pavlovych, Kharkiv 61017 (UA); Fedotov, Serhii Oleksiyovych, Kharkiv 61017 (UA)
(74) Representative: Lapienis, Juozas

(56) References cited:
- WO-A2-2009/065057
- CN-A- 101 962 063
- GB-A- 2 510 699
- US-A- 403 059
- US-A- 5 833 257
- US-A1- 2015 217 832
- US-B1- 7 111 860

## Description

The invention relates to vehicles driven by human muscular force.

Vehicles are well known from the state of the art, which use swinging pressure levers instead of rotating ones to exclude the so-called "dead" positions when the moment of force is zero.

The United State patent No. 403059, published on May 07, 1889, is considered the closest prior art document and discloses all of the features of the preamble of claim 1, and describes a bicycle comprising a frame, at least one driving wheel mounted on the frame and swinging pressure levers mounted on the frame and connected to the driving wheel by linkages. The swinging pressure lever is a two-arm lever, the first arm of which is designed to apply a muscular force thereto, and a two-arm driving lever is rotatably mounted on the second arm. The first arm of the driving lever is connected with the driving wheel by the linkage, and the second arm thereof is connected to a driving lever takeup unit.

The Eurasian application No. 201590064, published on September 30, 2015, describes a vehicle driven by swinging pressure levers, which was selected as the closest analogue of the claimed invention. The mentioned vehicle comprises a frame, at least one driving wheel mounted on the frame and a transmission mounted on the frame and comprising swinging pressure levers connected to the driving wheel by flexible elements. Each swinging pressure lever is provided with a driving lever rotatable around the axis of mounting thereof on the swinging pressure lever and connected with the driving wheel by the flexible element. The driving levers are provided with force controllers, the force being required for rotating the driving levers around the axis of mounting thereof on the swinging pressure levers. Here, if tension generated by the flexible element during movement of the vehicle exceeds force generated by the force controllers, the driving levers turn relative to the swinging pressure levers, thereby changing the transmission ratio; in the opposite case, the driving levers remain relatively motionless relative to the swinging pressure levers. The swinging pressure levers are kinematically interconnected to ensure alternate operation.

The disadvantage of the described vehicle is its relatively low efficiency thereof, which is associated with mechanical losses arising from the need to deform a spring of the force controller to overcome the force generated by the force controller and to change the transmission ratio.

An object of the claimed invention is to develop a vehicle, the design of which, while being simple and characterized by an optimal and harmonious arrangement, will enable for increasing its efficiency and ensuring a possibility to select optimum transmission ratio by a driver for him/herself and to continuously change the transmission ratio directly during movement of the vehicle, in particular without using any means for switching the transmission ratio, as well as a possibility to apply a muscular force to the swinging pressure levers simultaneously.

The specified object is solved due to developing a vehicle comprising a frame, at least one driving wheel mounted on the frame and swinging pressure levers mounted on the frame, the swinging pressure lever is a two-arm lever, the first arm of which is designed to apply a muscular force thereto, and a two-arm driving lever is rotatably mounted on the second arm, the first arm of the driving lever is connected to the driving wheel by a first linkage and the second arm thereof is connected to a driving lever takeup unit, where the driving lever takeup unit is configured to provide rotation of the driving lever in a direction opposite to the direction of rotation of the pressure lever when the pressure lever is turned from the position corresponding to the beginning of the operating stroke to the first predetermined position between the positions corresponding to the beginning and the end of the operating stroke ("rotation 1"); general motionlessness of the driving lever relative to the pressure lever when the pressure lever is turned from the first predetermined position to the second predetermined position between the positions corresponding to the beginning and the end of the operating stroke ("motionlessness"); and rotation of the driving lever in a direction coinciding with the direction of rotation of the pressure lever when the pressure lever is turned from the second predetermined position between the positions corresponding to the beginning and the end of the operating stroke to the position corresponding to the end of the operating stroke ("rotation 2").

Therefore, it is obvious that the change in the rotation angle of the driving lever relative to the pressure lever in the said vehicle is non-linear, and the elongation of the first linkage (i.e. increase of the length of the first linkage - first linkage reset springing element assembly due to the stretching of the first linkage reset springing element) is not directly proportional to the increase of the rotation angle of the pressure lever relative to its position which corresponds to the beginning of the operating stroke. The described movement of the driving lever relative to the pressure lever is thus indicated in the text of this description as "rotation 1 - motionlessness- rotation 2". In one of the preferred embodiments presented in the figures described below, the said movement is provided when the driving lever arm connected to the driving lever takeup unit is an arm which is closer to the rotation axis of the pressure lever, and the driving lever arm connected by the first linkage with the driving wheel is an arm which is farther from the rotation axis of the pressure lever. The first predetermined position of the pressure lever and the second predetermined position of the pressure lever between positions corresponding to the beginning and the end of the operating stroke (hereinafter referred to as the first and second predetermined positions of the pressure lever respectively) may be predetermined directly when manufacturing the vehicle or by the driver if the vehicle design implies such option. The said second predetermined position is a position between the described first predetermined position of the pressure lever and its position corresponding to the end of the operating stroke.

The connection of the pressure levers to the driving wheel is provided by the driving levers mounted on them, which in turn are directly connected by the first linkage with the driving wheel. The first linkage may be a flexible element, for example a cable, a chain or a composite rope. Preferably, the first linkage connects the pressure lever to the driving wheel via a movable sleeve rotatable in one direction, which may be, for example an overrunning clutch, and may be mounted on a shaft of the driving wheel. The first linkage thrown over the overrunning clutch can be connected to the first end of the first linkage reset springing element, the second end of which is attached to the frame. The first linkage reset springing element also serves to return the pressure lever to a position corresponding to the beginning of the operating stroke when it is compressed. Such design of the described "first linkage - overrunning clutch - first linkage reset springing element" assembly is widely known in the art.

Preferably, the driving lever is rotatably mounted on the end of the corresponding arm of the pressure lever. It is also preferable that the end of the first arm of the driving lever is connected to the driving wheel by the first linkage, and the end of the second arm is connected to the driving lever takeup unit. The term "end" in this case and hereinafter in the context of this application means a place which is the immediate end of the corresponding arm or corresponding structural element or which is located some distance from the immediate end of the corresponding arm or corresponding structural element, but generally giving the impression of the end of the corresponding arm or corresponding structural element.

By providing the transmission of the vehicle in the manner described above, i.e. by providing the pressure levers and the driving levers as two-arm ones, and by connecting one of the arms of the driving lever to the first linkage, and the second arm - to the driving lever takeup unit, it is possible to avoid losses occurring in the prototype vehicle design, and thus increase the efficiency of the claimed vehicle. While in the prototype vehicle the driving lever is turned only in case of overcoming the force generated by the force controller, in the vehicle according to the present invention, the takeup unit of the driving lever pulls the latter, thereby defining the driving lever path of motion, which, under given settings of the driving lever takeup unit, remains constant when the pressure levers are turned with the same amplitude and does not depend on the load, i.e. on the straight-ahead, descending or ascending movement.

Due to the absence of kinematic connection between the pressure levers, the driver can independently choose in which part of the transmission ratio range the pressure levers should be operated (by selecting the rotation amplitude of the pressure levers), thereby choosing an optimum transmission ratio for him/herself during movement of the vehicle. Here, as mentioned above, the first linkage reset springing element can serve to return the pressure lever to the position corresponding to the beginning of the operating stroke. In addition, the absence of kinematic connection enables to apply a muscular force to the pressure levers simultaneously, thereby increasing two times the power (if there are two pressure levers in the vehicle design).

In case the vehicle is a bicycle, the pressure levers are preferably pedal levers, and the position of the said levers corresponding to the beginning of the operating stroke is their uppermost position, the position of the said levers corresponding to the end of the operating stroke is their lowest position respectively. However, there is possible an embodiment of the claimed vehicle in the form of a bicycle of a different design, where positions of the swinging pedal levers corresponding to the beginning and the end of the operating stroke are their other positions.

In case the vehicle is a manually operated vehicle, the pressure lever arm designed to apply a muscular force thereto is preferably equipped with a handle, and the positions of the said levers corresponding to the beginning and the end of the operating stroke depend on a particular vehicle design and may correspond to both the uppermost and lowest positions and, for example, the outermost and nearest positions to the driver's chest, respectively.

The said embodiments of the vehicle (the bicycle or the manually operated vehicle) are exemplary and do not limit the scope of claims on this application, and the claimed vehicle can be realized in the form of any vehicle characterized by the appended claims.

In one of the most preferred embodiments of the claimed vehicle the driving lever takeup unit comprises a takeup element and a second linkage, one end of which is attached to the frame and the second end is connected to the second arm of the driving lever to provide the above described movement of the driving lever of the type "rotation 1 - motionlessness - rotation 2". Said movement is realized by pulling the driving lever by the second linkage of the driving lever takeup unit via the takeup element (the second linkage is configured to rotate about the takeup element when the pressure lever is turned), thereby defining the driving lever path of motion. The second linkage end can be attached to the frame directly or by means of at least one intermediate element. Preferred is such an embodiment of the driving lever takeup unit, wherein the end of its second linkage is attached to the frame to change the operating length of the second linkage. This can be achieved, for example, by securing the end of the second linkage to the first end of the intermediate element, at least the second end of which is threaded and in turn is secured to the frame by a nut. The operating length of the second linkage in the context of this description therefore represents a length of the second linkage from the attachment point thereof (of the second linkage) on the frame to the attachment point of its end on the driving lever arm, or a length from the attachment point of the intermediate element on the frame to the attachment point of the second linkage end on the driving lever arm. When rotating the nut, the operating length of the second linkage will change, which in turn will change the driving lever path of motion relative to the pressure lever, and therefore will change possible range of the transmission ratio (the driver can choose in which part of the current transmission ratio range the pressure levers should be operated, thereby choosing an optimum transmission ratio for him/herself from the possible ones directly during the vehicle movement process). At the same time, due to the said change in the operating length of the second linkage, the following can be provided:
- rotation of the pressure lever from the position corresponding to the beginning of the operation stroke to the position corresponding to the end of the operation stroke, of the type "rotation 1 - motionlessness- rotation 2" (in this case the operating length of the second linkage of the driving lever takeup unit will be relatively minimal);
- rotation of the pressure lever from the position corresponding to the beginning of the operation stroke to the position corresponding to the end of the operation stroke, of the type "rotation 1 - motionlessness" (in this case the operating length of the second linkage of the driving lever takeup unit will be such that the second predetermined position of the pressure lever coincides with the position corresponding to the end of the operation stroke, and the operating length of the second linkage of the driving lever takeup unit is between the maximal and minimal operating lengths);
- rotation of the pressure lever from the position corresponding to the beginning of the operating stroke to the position corresponding to the end of the operating stroke, of the type "rotation 1" (in this case, the operating length of the second linkage of the driving lever takeup unit will be such that both the first and second predetermined positions of the pressure lever are absent, i.e., the said second linkage does not pull the driving lever via the takeup element, and its operating length is comparatively maximal).

For any of the movements of the pressure lever realized at a particular time moment, which are different from the described "rotation 1 - motionlessness - rotation 2", there is always a possibility to adjust the operating length of the second linkage to bring it to the length providing the above-described movement "rotation 1 - motionlessness - rotation 2". Thus, the statement in this description that the driving lever takeup unit is configured with a possibility to provide the driving lever movement of the type "rotation 1- motionlessness - rotation 2" means that the mentioned possibility has already been realized in the vehicle, or there is always a possibility to realize it.

The operating length of the second linkage of the driving lever takeup unit can be changed once by the driver, for example, for setting the first and second positions of the pressure levers which are optimal for him/herself and the position of the pressure levers corresponding to the end of the operating stroke, or during movement of the vehicle. In the latter case, the vehicle may comprise a mechanical means and/or an electrical means for changing the operating length of the second linkage of the driving lever takeup unit. These means are an option, and the presence of them does not exclude the possibility of choosing an optimum transmission ratio by the driver for him/herself and a stepless variation of the transmission ratio directly during the process of movement of the vehicle without using any means for switching the transmission ratio, by choosing in which part of the transmission ratio range the pressure levers should be operated, where a possible transmission ratio is set by changing the operating length of the second linkage of the driving lever takeup unit in the above-described manner.

The mechanical means for changing the operating length of the second linkage of the driving lever takeup unit is preferably a manual control means which can be mounted on the vehicle handlebar and which is connected via a flexible cable and a splitter or splitter-multiplier to the nuts securing the ends of the second linkages of the driving lever takeup unit to the vehicle frame.

The electrical means for changing the operating length of the second linkage of the driving lever takeup unit is preferably a manual control means which can be mounted on the vehicle handlebar and which is connected via an electric motor and a splitter or splitter-multiplier to the nuts securing the ends of the second linkages of the driving lever takeup unit to the vehicle frame. The said electrical means may further comprise load sensors for the pressure levers and an associated electronic control means, which in turn is connected to the electric motor. Depending on a muscular force applied to the pressure levers, the electronic control means commands the electric motor to change the transmission ratio. This makes it possible to optimize energy consumption under varying movement conditions.

In yet another preferred embodiment of the present invention, the claimed vehicle comprises a seat with a seatpost mounted on the frame by a guide sleeve to move down and up, the driving lever takeup unit comprises a takeup element and a second linkage, the first end of which is attached to the lower end of the seatpost and the second end is connected to the second arm of the driving lever. In this case, the second linkage operating length is changed by the driver's weight when moving the seatpost down and up. Here, the movement of the seatpost is limited by the second linkage of the driving lever takeup unit with the help of the system of structural elements to which it is connected.

Therefore, one end of the second linkage of the driving lever takeup unit should be attached to the vehicle (to one of its structural elements, which are not related to the transmission elements or the wheels, for example, to the frame or to the lower end of the seatpost, as described in the preferred embodiments) and the second end should be connected to the second arm of the driving lever via the takeup element to provide the above-described movement of the driving lever when the pressure lever is turned.

The claimed invention is explained in more detail with the help of the following figures:
Figure 1 is a side view of a vehicle according to one of the embodiments of the invention;
Figure 2 is a perspective view of the vehicle transmission, wherein one of the ends of the second linkage of the driving lever takeup unit is attached to the frame, according to one of the embodiments of the invention;
Figures 3 to 7 are schematic side views of the arrangement of the vehicle transmission structural elements according to one of the embodiments of the invention during the driving lever movement of the type "rotation 1 - motionlessness - rotation 2";
Figure 8 is a diagram illustrating the path of motion of the vehicle transmission structural elements according to one of the embodiments of the invention during the driving lever movement of the type "rotation 1 - motionlessness - rotation 2";
Figure 9 is a perspective view of a section of the vehicle transmission with a mechanical means for changing the operating length of the second linkage of the driving lever takeup unit, according to one of the embodiments of the invention;
Figure 10 is a perspective view of a section of the vehicle transmission with an electrical means for changing the operating length of the second linkage of the driving lever takeup unit, according to one of the embodiments of the invention;
Figure 11 is a perspective view of a section of the vehicle transmission with an electrical means for changing the operating length of the second linkage of the driving lever takeup unit, according to another embodiment of the invention;
Figure 12 is a perspective view of the vehicle transmission, wherein one of the ends of the second linkage of the driving lever takeup unit is attached to the lower end of the seatpost, according to one of the embodiments of the invention.

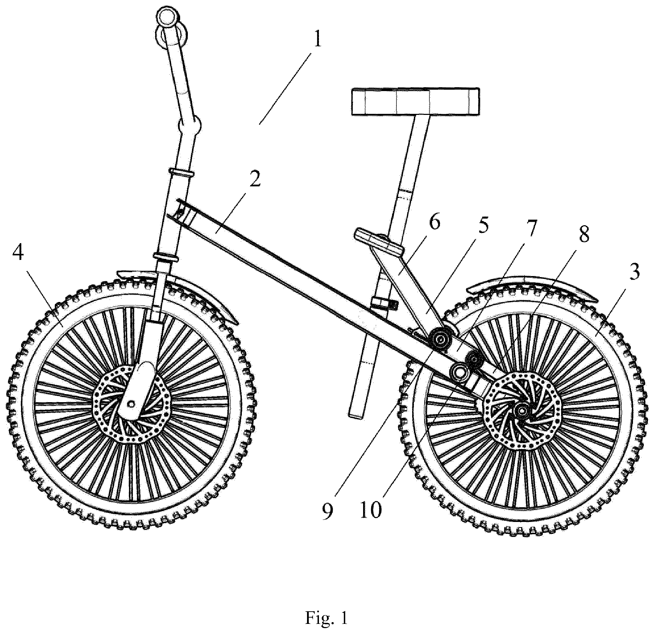

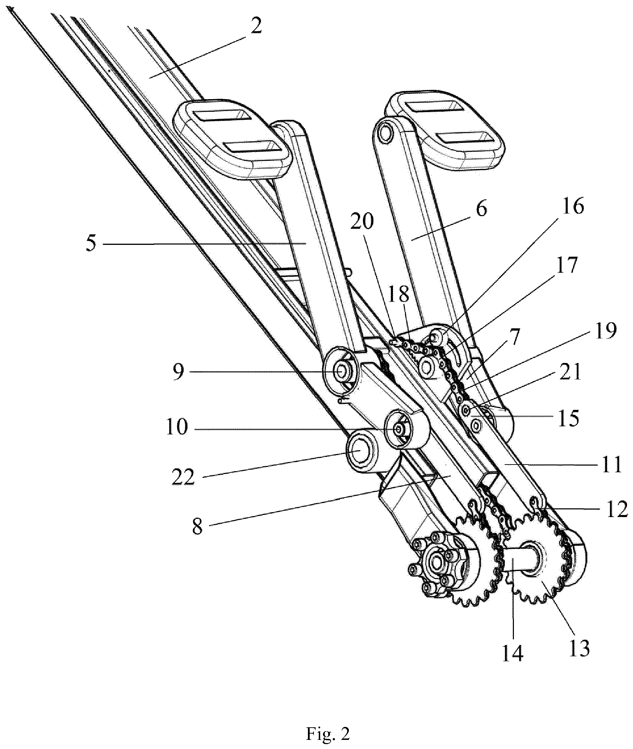

Figures 1 and 2 illustrate a side view of the vehicle according to one of the embodiments of the invention and a perspective view of the vehicle transmission, respectively. In this embodiment, the vehicle is a bicycle 1 comprising a frame 2, a driving wheel 3 and a swivel wheel 4, as well as pressure levers 5. The first arm 6 of each pressure lever 5 is equipped with a pedal, and a driving lever 8 is rotatably mounted on the second arm 7. Position 9 indicates an axis of rotation of the pressure levers 5 relative to the frame 2, and position 10 indicates an axis of rotation of the driving levers 8 relative to the pressure levers 5. The first arm 11 of the driving lever 8 is connected by a first linkage 12 to an overrunning clutch 13 mounted on a shaft 14 of the driving wheel 3. The second arm 15 of the driving lever 8 is connected to a driving lever 8 takeup unit. The said unit comprises a takeup element 16 and a second linkage 17, the first end 18 of which is attached to the frame 2 and the second end 19 is connected to the second arm 15 of the driving lever 8. The second linkage 17 operating length is a length of the second linkage from the point 20 of attachment thereof on the frame 2 to the point 21 of attachment thereof on the arm 15 of the driving lever 8. For convenience, a stroke limiter 22 for the pressure levers 5 is installed on the frame 2, however, the said stroke limiter 22 may be absent, and the stroke of the pressure levers will be limited by the length of the driver's legs or by the predetermined settings of the driving lever 8 takeup unit.

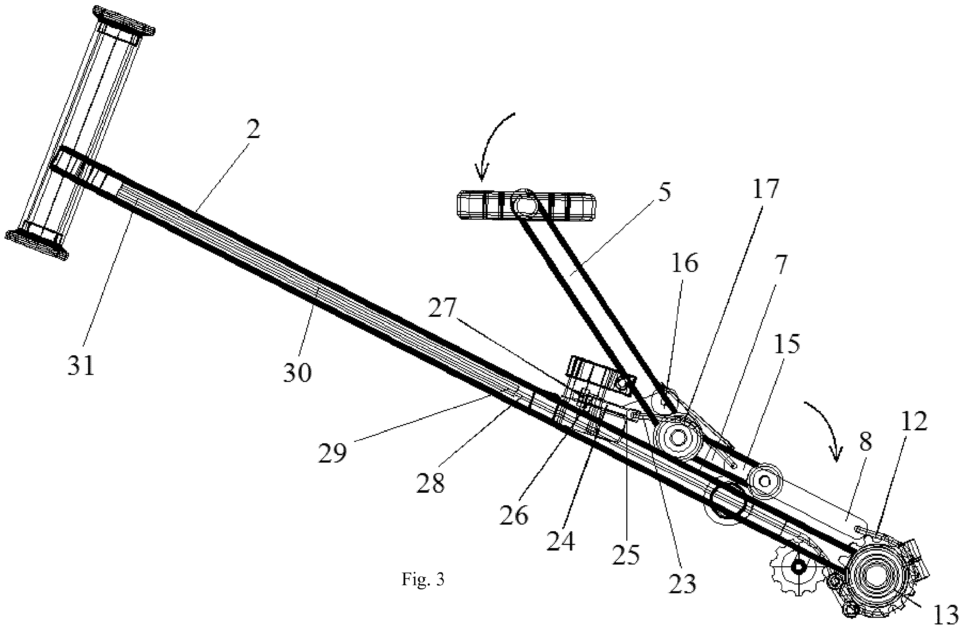

Figures 3 to 7 illustrate side views of the arrangement of the vehicle transmission structural elements according to one of the embodiments of the invention during the driving lever movement of the type "rotation 1 - motionlessness - rotation 2". These figures illustrate an embodiment of the driving lever 8 takeup unit, wherein the end 23 of the second linkage 17 thereof is attached to the frame 2 by an intermediate element 24. The end 23 of the second linkage 17 is attached to the first end 25 of the intermediate element 24, and the second end 26 is provided with a thread and secured to the frame 2 by a nut 27. The operating length of the second linkage 17 is a length from the attachment point of the end 26 of the intermediate element 24 on the frame 2 to the attachment point of the end of the second linkage 17 on the arm 15 of the driving lever 8.

Also, it is seen in Figures 3 to 7 that the first linkage 12, which is thrown over the overrunning clutch 13, is connected to the first 29 of the ends of a first linkage 12 reset springing element 30, the second end 31 of which is attached to the frame 2. The first linkage 12 reset springing element 30 is located inside the frame 2 in the illustrated embodiment.

Figure 3 illustrates a side view of the arrangement of the vehicle transmission structural elements in the position of the pressure lever 5 corresponding to the beginning of the operating stroke. In the illustrated embodiment, in this position of the pressure lever 5, the driving lever 8 occupies a position generally parallel to the position of the arm 7 of the pressure lever 5. The second linkage 17 does not pull the driving lever 8 via the takeup element 16 in the described position of the pressure lever 5.

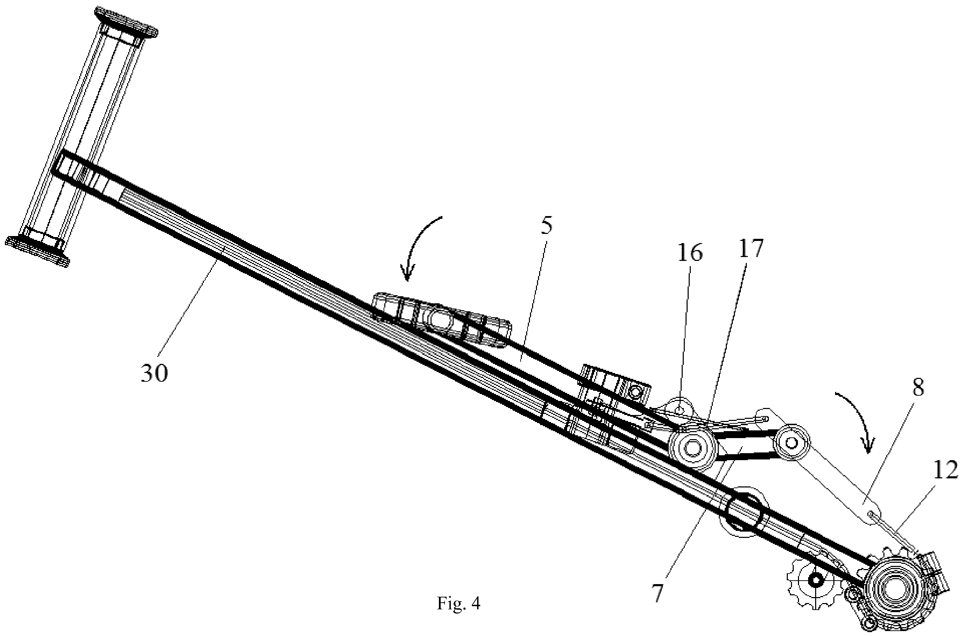

Figure 4 illustrates a side view of the arrangement of the vehicle transmission structural elements in the position of the pressure lever 5 between the position corresponding to the beginning of the operating stroke and the first predetermined position (an intermediate position during movement "rotation 1"). When the pressure lever 5 is turned from the position corresponding to the beginning of the operating stroke in the direction of the first predetermined position, the driving lever 8 rotates in a direction opposite to the direction of the pressure lever 5 rotation. Thus, in the illustrated position of the pressure lever 5, the driving lever 8 is turned relative to it, i.e. an angle between the arm 7 of the pressure lever 5 and the driving lever 8 is decreased in comparison with the angle in the position of the pressure lever 5 corresponding to the beginning of the operating stroke shown in Fig. 3. The second linkage 17 in the described position of the pressure lever 5 does not yet pull the driving lever 8 via the takeup element 16, and its rotation is effected by gravity.

Then, the driving lever 8 continues to rotate relative to the pressure lever 5 from its position illustrated in Fig. 4, until the pressure lever 5 occupies the first predetermined position (the completion of movement "rotation 1").

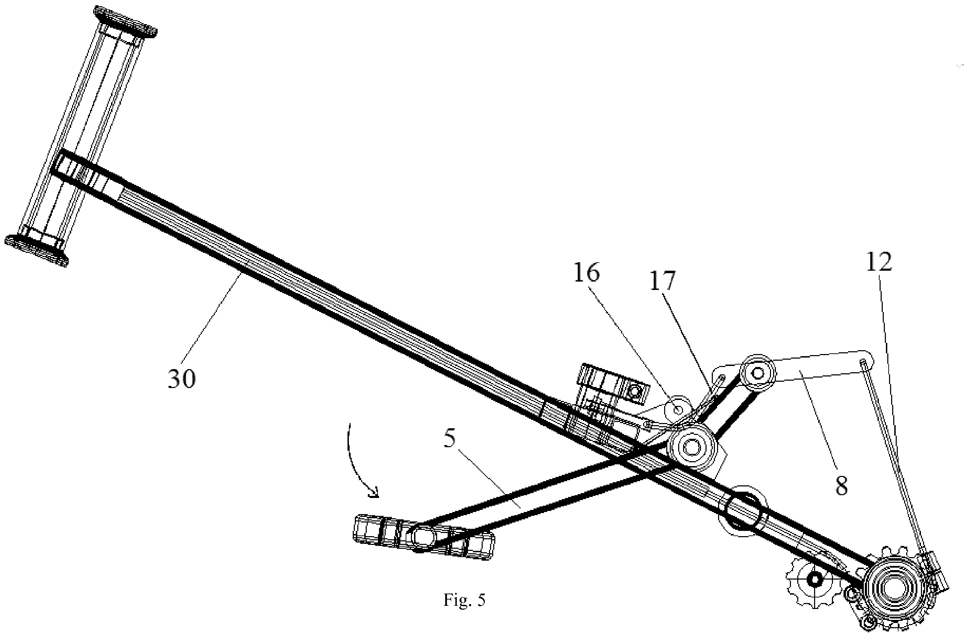

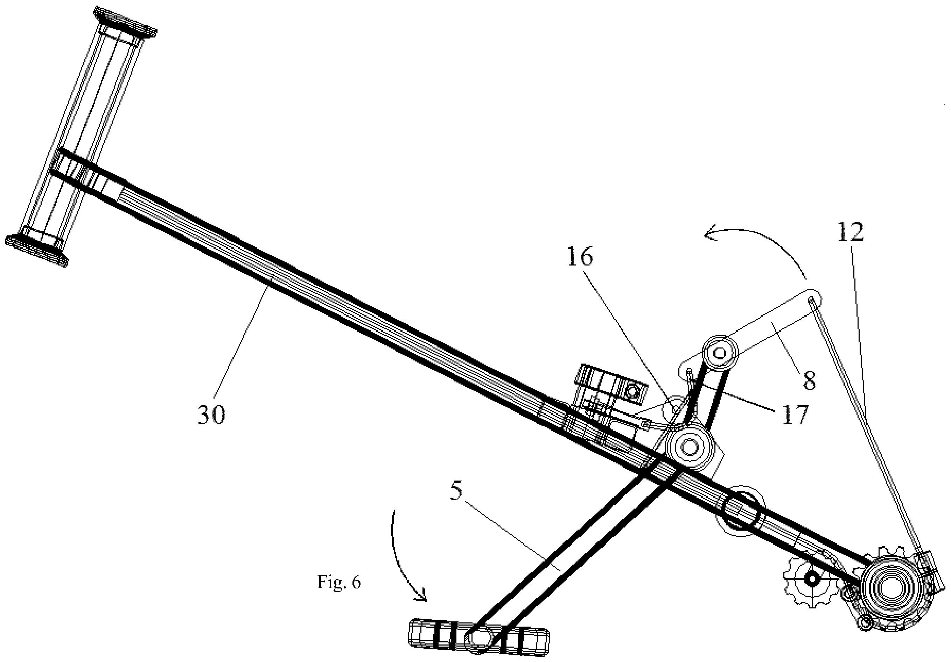

Figures 5 and 6 illustrate side views of the arrangement of the vehicle transmission structural elements in the first and second predetermined positions of the pressure lever 5 respectively. When the pressure lever 5 is turned from the first predetermined position to the second predetermined position, motionlessness of the driving lever 8 relative to the pressure lever 5 is generally provided, i.e. the angle between them practically does not change. In the described positions of the pressure lever 5, the second linkage 17 pulls the driving lever 8 via the takeup element 16 preventing it from further rotation, which is the reason for the generally constant angle between the arm 7 of the pressure lever 5 and the driving lever 8.

When the pressure lever 5 is further turned from the second predetermined position, illustrated in Fig. 6, to the position corresponding to the end of the operating stroke (movement "rotation 2"), the second linkage 17 pulls the driving lever 8 via the takeup element 16 (when it rotates about the takeup element 16) such that the driving lever 8 rotates in the direction coinciding with the direction of rotation of the pressure lever 5.

The directions of rotation of the pressure lever 5 and driving lever 8 when a muscular force is further applied to the pressure levers, which are in their illustrated positions, are indicated by arrows in Figures 3 - 6.

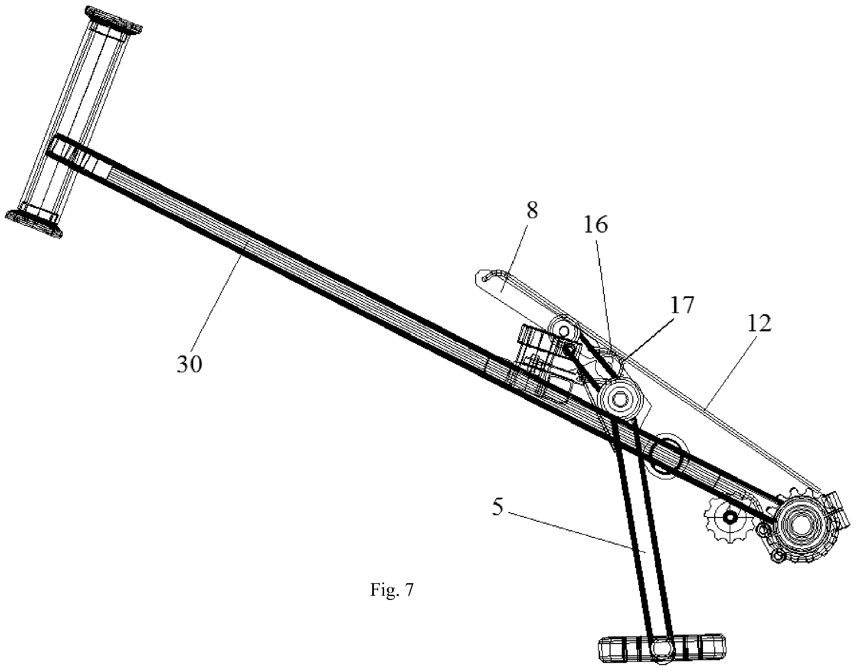

Figure 7 is a side view of the arrangement of the vehicle transmission structural elements in the position of the pressure lever 5 corresponding to the end of the operating stroke. In the illustrated position of the pressure lever 5, the driving lever 8 is turned relative thereto to the side opposite to the side shown in Figures 5 and 6, i.e. the angle between the arm 7 of the pressure lever 5 and the driving lever 8 is increased in comparison with the angle in the position of the pressure lever 5 corresponding to the first and second predetermined positions shown in Figures 5 and 6. Moreover, in this particular illustrated embodiment, the said angle is also increased in comparison with the angle in the position of the pressure lever 5 corresponding to the beginning of the operating stroke shown in Figure 3.

In Figures 3 to 7, the elongation of the springing element 30 of the first linkage 12 is seen when the pressure lever 5 is turned from the position corresponding to the beginning of the operating stroke to the position corresponding to the end of the operating stroke.

Thus, the takeup unit of the driving lever 8 pulls the latter, defining the path of motion of the driving lever 8, which, for the given settings of the driving lever 8 takeup unit, remains constant when the pressure levers 5 are turned with the maximum amplitude - between the positions corresponding to the beginning and the end of the operating stroke.

Obviously, when changing the settings of the driving lever 8 takeup unit, i.e. when the second linkage 17 operating length is changed, the path of motion of the driving lever 8 changes in comparison with that shown in the figures when the pressure levers 5 are turned with the maximum amplitude, but it will be constant for the given specific settings.

It is also obvious that when choosing an optimum transmission ratio directly in the process of the vehicle movement by selecting an amplitude of rotation of the pressure levers - any amplitude among the maximum possible ones, the path of motion of the driving lever 8 will also be constant for the given specific amplitude. This means that the driver can move his/her legs in a range of amplitudes providing, for example, only movement "rotation 1", or only movement "rotation 1 - motionlessness", or only movement "motionlessness - rotation 2" etc., choosing thereby an optimum transmission ratio for him/herself.

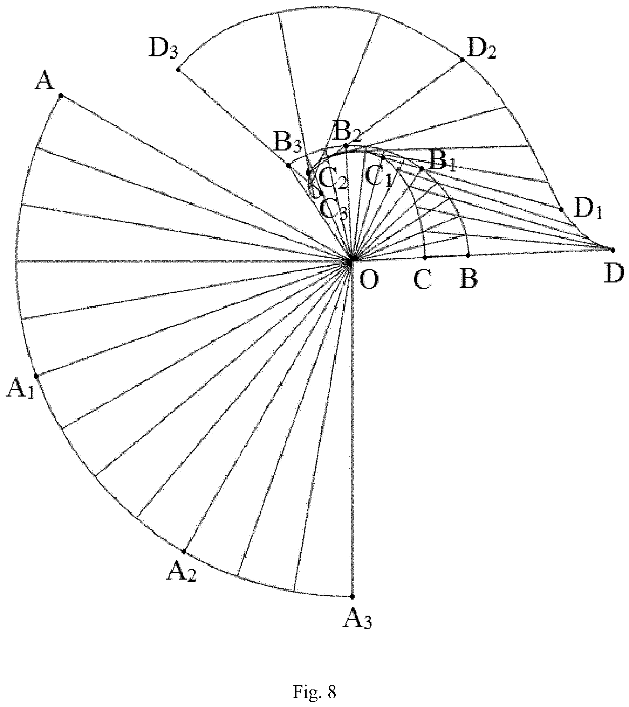

Figure 8 presents a diagram showing paths of motion of the vehicle transmission structural elements according to the embodiment illustrated in Figures 3 to 7 during the "rotation 1 - motionlessness - rotation 2" type of movement of the driving lever 8 relative to the pressure lever 5. In this diagram, point O designates an axis 9 of rotation of the pressure lever 5 relative to the frame 2, and point B designates an axis 10 of rotation of the driving lever 8 relative to the pressure lever 5, which are indicated by positions in Figure 2. The pressure lever 5 has two arms 6 and 7 designated as OA and OB respectively, i.e. point B designates both the said axis 10 and the end of the arm 7 of the pressure lever 5. The driving lever 8 is designated in the diagram as CD, and its arms 15 and 11 are respectively BC and BD. These designations relate to the pressure lever 8 position which corresponds to the beginning of the operating stroke.

In the mentioned position of the pressure lever corresponding to the beginning of the operating stroke, the driving lever CD occupies a position parallel to the position of the pressure lever arm OB, and angle ZOBD between them is 180°.

It is seen in the diagram that when the pressure lever is turned to the first predetermined position, in which its arms occupy positions corresponding to intervals OA₁ and OB₁ in the diagram (movement "rotation 1"), the angle between the corresponding arm of the pressure lever and the driving lever is gradually decreases and is an angle ∠OB₁D₁ in the first predetermined position.

When the pressure lever is further turned to the second predetermined position, in which its arms occupy positions corresponding to intervals OA₂ and OB₂ in the diagram (movement "motionlessness"), the angle between the corresponding arm of the pressure lever and the driving lever remains generally constant and is an angle ∠OB₂D₂, i.e. ∠OB₁D₁ ≈ ∠OB₂D₂, in the second predetermined position.

Further, when the pressure lever is turned from its second predetermined position to the position corresponding to the end of the operating stroke, in which its arms occupy positions corresponding to intervals OA₃ and OB₃ in the diagram (movement "rotation 2"), the angle between the corresponding arm of the pressure lever and the driving lever gradually increases and is an angle ∠OB₃D₃ in the position corresponding to the end of the operating stroke, which is a straight angle and accordingly exceeds the angle ZOBD in the embodiment illustrated in the diagram.

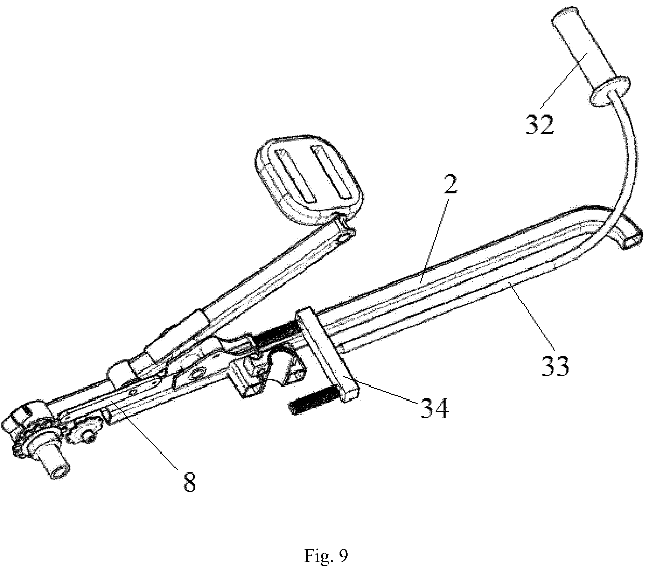

Figure 9 presents a perspective view of a section of the vehicle transmission with a mechanical means for changing the operating length of the second linkage 17 of the driving lever 8 takeup unit according to one of the embodiments of the invention (the second linkage 17 is not shown in this Figure). The said mechanical means comprises a manual control means 32 which can be mounted on a handlebar of the vehicle and connected to the nuts via a flexible cable 33 and a splitter or splitter-multiplier (these structural elements are installed inside a section 34 of the frame 2 and are not visible in the figure) securing the ends of the second linkage 17 of the driving lever 8 takeup unit to the vehicle frame 2.

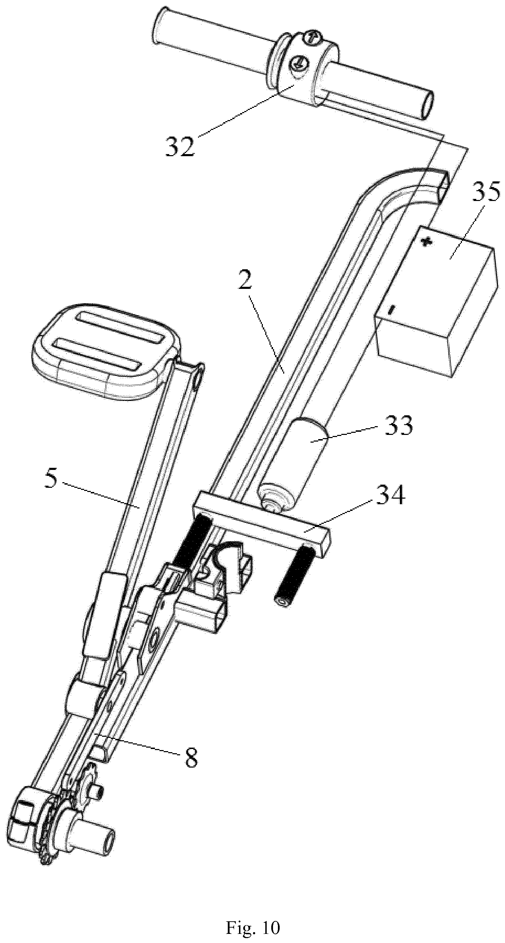

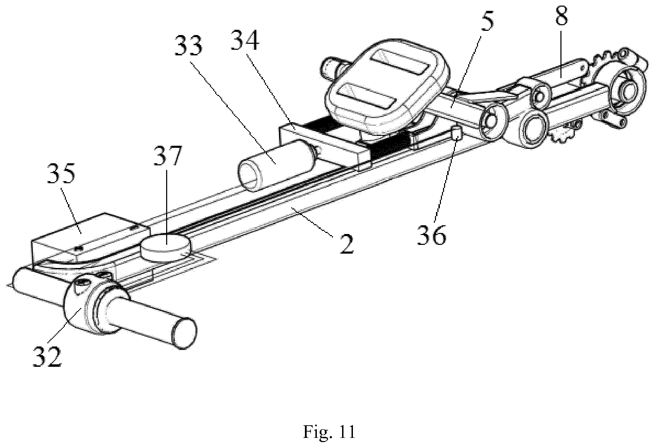

Figure 10 presents a perspective view of a section of the vehicle transmission with an electrical means for changing the operating length of the second linkage of the driving lever 8 takeup unit according to one of the embodiments of the invention (the second linkage 17 is not shown in this Figure). The said electrical means comprises a manual control means 32 which can be mounted on the handlebar of the vehicle and connected to the nuts via an electric motor 33 and the splitter or splitter-multiplier (these structural elements are installed inside the section 34 of the frame 2 and are not visible in the Figure) securing the ends of the second linkage 17 of the driving lever 8 takeup unit to the vehicle frame 2. The electric motor 33 is equipped with a battery 35. The said electrical means may further comprise load sensors 36 for the pressure levers 5 and an associated electronic control means 37 which in turn is connected to the electric motor 33, as depicted in Figure 11. Depending on a muscular force applied to the pressure levers 5, the electronic control means 37 commands the electric motor 33 to change the length of the second linkage 17 of the driving lever 8 takeup unit and thus the transmission ratio, which enables to optimize energy consumption under varying movement conditions.

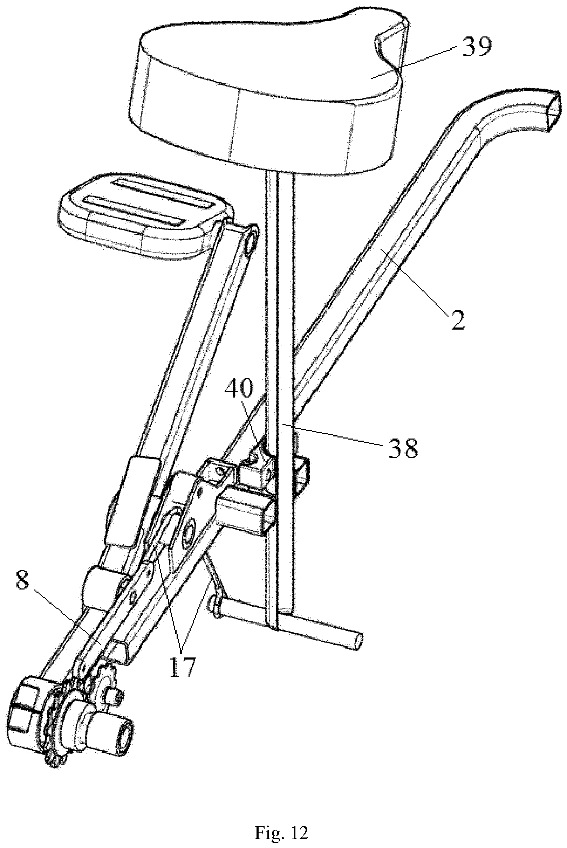

Figure 12 presents a perspective view of the vehicle transmission, wherein one of the ends of the second linkage 17 of the driving lever 8 takeup unit is attached to the lower end of a seatpost 38 on which a seat 39 is mounted. The said seatpost 38 is mounted on the frame 2 by a guide sleeve 40 to move down and up. In this case, the second linkage 17 operating length is changed by the driver's weight when the seatpost 38 is moved down and up. The movement of the seatpost 38 is limited by the second linkage 17 of the driving lever takeup unit with the help of the system of structural elements to which it is connected (second linkage 17 - driving lever 8 - first linkage 12 -first linkage 12 reset springing element 30).

It should be understood that the claimed vehicle as defined in the appended claims is not necessarily limited to the specific features and embodiments described above. In contrast, the specific features and embodiments described above are disclosed as exemplar embodiments of the claims, and other equivalent features may be encompassed by the claims of the present invention.

## Claims

1. A vehicle comprising a frame (2), at least one driving wheel (3) mounted on the frame (2) and swinging pressure levers (5) mounted on the frame (2),
the swinging pressure lever (5) is a two-arm lever, the first arm (6) of which is designed to apply a muscular force thereto, and a two-arm driving lever (8) is rotatably mounted on the second arm (7),
wherein the first arm (11) of the driving lever (8) is connected with the driving wheel (3) by a first linkage (12), and
the second arm (15) thereof is connected to a driving lever (8) takeup unit, **characterized in that**
the driving lever (8) takeup unit is configured to provide
rotation of the driving lever (8) in a direction opposite to the direction of rotation of the pressure lever (5) when the pressure lever (5) is turned from the position corresponding to the beginning of the operating stroke to the first predetermined position between positions corresponding to the beginning and the end of the operating stroke;
general motionlessness of the driving lever (8) relative to the pressure lever (5) when the pressure lever (5) is turned from the first predetermined position to the second predetermined position between the positions corresponding to the beginning and the end of the operating stroke; and
rotation of the driving lever (8) in a direction coinciding with the direction of rotation of the pressure lever (5) when the pressure lever (5) is turned from the second predetermined position between the positions corresponding to the beginning and the end of the operating stroke to the position corresponding to the end of the operating stroke.

2. The vehicle according to claim 1, **characterized in that** the driving lever (8) takeup unit comprises a takeup element (16) and a second linkage (17), the first end (18) of which is attached to the frame (2) and the second end (19) is connected to the second arm (15) of the driving lever (8).

3. The vehicle according to claim 2, **characterized in that** the end (18) of the second linkage (17) of the driving lever (8) takeup unit is attached to the frame (2) to change the operating length of the second linkage (17).

4. The vehicle according to claim 3, **characterized in that** it comprises a mechanical or electrical means for changing the operating length of the second linkage (17) of the driving lever (8) takeup unit.

5. The vehicle according to claim 1, **characterized in that** it comprises a seat (39) with a seatpost (38) mounted on the frame (2) by a guide sleeve (40) to move down and up, the driving lever (8) takeup unit comprises a takeup element (16) and a second linkage (17), the first end (18) of which is attached to the lower end of the seatpost (38) and the second end (19) is connected to the second arm (15) of the driving lever (8).

## Patentansprüche

1. Fahrzeug mit einem Rahmen (2), mindestens einem am Rahmen (2) montierten Antriebsrad (3) und am Rahmen (2) montierten Schwenkdruckarmen (5),
wobei der Schwenkdruckarm (5) ein zweiarmiger Arm ist, sein erster Arm (6) dazu ausgelegt ist, darauf eine Muskelkraft aufzubringen, und ein zweiarmiger Betätigungsarm (8) drehbar am zweiten Arm (7) montiert ist,
wobei der erste Arm (11) des Betätigungsarms (8) mit dem Antriebsrad (3) durch eine erste Stange (12) vereinigt ist, und
sein zweite Arm (15) mit dem Empfangsblock des Betätigungsarms (8) vereinigt ist, **dadurch gekennzeichnet, dass**
der Empfangsblock des Betätigungsarms (8) so konfiguriert ist, um eine Drehung des Betätigungsarms (8) in einer Richtung entgegengesetzt zur Drehrichtung des Druckarms (5), wenn der Druckarm (5) von der Position, die dem Beginn des Arbeitshubs entspricht, zu der ersten vorbestimmten Position zwischen Positionen, die dem Beginn und dem Ende des Arbeitshubs entsprechen, gedreht wird, bereitzustellen;
eine allgemeine Bewegungslosigkeit des Betätigungsarms (8) relativ zu dem Druckarm (5), wenn der Druckarm (5) von der ersten vorbestimmten Position in die zweite vorbestimmte Position zwischen den Positionen, die dem Beginn und dem Ende des Arbeitshubs entsprechen, gedreht wird, bereitzustellen; und
eine Drehung des Betätigungsarms (8) in einer Richtung, die mit der Drehrichtung des Druckarms (5) zusammenfällt, wenn der Druckarm (5) von der zweiten vorbestimmten Position zwischen den Positionen, die dem Beginn und dem Ende des Arbeitshubs entsprechen, zu der Position, die dem Ende des Betätigungshubs entspricht, gedreht wird, bereitzustellen.

2. Fahrzeug nach Anspruch 1, **dadurch gekennzeichnet, dass** der Empfangsblock des Betätigungsarms (8) ein Empfangselement (16) und eine zweite Stange (17) aufweist, ihr erstes Ende (18) an dem Rahmen (2) befestigt ist und ihr zweites Ende (19) mit dem zweiten Arm (15) des Betätigungsarms (8) vereinigt ist.

3. Fahrzeug nach Anspruch 2, **dadurch gekennzeichnet, dass** das Ende (18) der zweiten Stange (17) des Empfangsblocks des Betätigungsarms (8) an dem Rahmen (2) um die Betätigungslänge der zweiten Stange (17) zu ändern befestigt ist.

4. Fahrzeug nach Anspruch 3, **dadurch gekennzeichnet, dass** es eine mechanische oder elektrische Einrichtung zum Ändern der Betätigungslänge der zweiten Stange (17) des Empfangsblocks des Betätigungsarms (8) aufweist.

5. Fahrzeug nach Anspruch 1, **dadurch gekennzeichnet, dass** es einen Sitz (39) mit einer Sattelstütze (38), die an dem Rahmen (2) mittels einer Führungshülse (40) befestigt ist, um sich nach unten und oben zu bewegen, aufweist, wobei der Empfangsblock des Betätigungsarms (8) ein Empfangselement (16) und eine zweite Stange (17) umfasst, ihr erstes Ende (18) am unteren Ende der Sattelstütze (38) befestigt ist und ihr zweites Ende (19) mit dem zweiten Arm (15) des Betätigungsarms (8) vereinigt ist.

## Revendications

1. Un véhicule comprenant un cadre (2), au moins une roue (3) d'entraînement montée sur le cadre (2) et des leviers (5) de pression pivotants montés sur le cadre (2), où le levier (5) de pression pivotant est un levier à deux bras dont le premier bras (6) est conçu pour y appliquer une force musculaire, et un levier (8) d'entraînement à deux bras est monté à rotation sur le deuxième bras (7),
dans lequel le premier bras (11) du levier (8) d'entraînement est relié à la roue (3) d'entraînement par une première liaison (12), et
son second bras (15) est relié à une unité de tension du levier (8) d'entraînement, **caractérisé en ce que**
l'unité de tension du levier (8) d'entraînement est configuré pour fournir une rotation du levier (8) d'entraînement dans un sens opposé au sens de rotation du levier (5) de pression lorsque le levier (5) de pression est tourné à partir de la position correspondante au début de la course de coupe à la première position prédéterminée entre les positions correspondantes au début et à la fin de la course de coupe;
une immobilisation générale du levier (8) d'entraînement par rapport au levier (5) de pression lorsque le levier (5) de pression est tourné à partir de la première position prédéterminée à la seconde position prédéterminée entre les positions correspondantes au début et à la fin de la course de coupe; et
une rotation du levier (8) d'entraînement dans un sens coïncidant avec le sens de rotation du levier (5) de pression lorsque le levier (5) de pression est tourné à partir de la seconde position prédéterminée entre les positions correspondantes au début et à la fin du course de coupe à la position correspondante à la fin de la course de coupe.

2. Le véhicule selon la revendication 1, **caractérisé en ce que** l'unité de tension du levier (8) d'entraînement comprend un élément (16) de tension et une seconde liaison (17), dont la première extrémité (18) est fixée au cadre (2) et la seconde extrémité (19) est reliée au second bras (15) du levier (8) d'entraînement.

3. Le véhicule selon la revendication 2, **caractérisé en ce que** l'extrémité (18) de la seconde liaison (17) de l'unité de tension du levier (8) d'entraînement est fixée au cadre (2) pour modifier la longueur de fonctionnement de la deuxième liaison (17).

4. Le véhicule selon la revendication 3, **caractérisé en ce qu'**il comprend un moyen mécanique ou électrique pour modifier la longueur de fonctionnement de la seconde liaison (17) de l'unité de tension du levier (8) d'entraînement.

5. Le véhicule selon la revendication 1, **caractérisé en ce qu'**il comprend une selle (39) avec une tige (38) de selle montée sur le cadre (2) par un manchon (40) de guidage pour descendre et monter, l'unité de tension du levier (8) d'entraînement comprend un élément de tension (16) et une seconde liaison (17) dont la première extrémité (18) est fixée à l'extrémité inférieure de la tige (38) de selle et la seconde extrémité (19) est reliée au second bras (15) du levier (8) d'entraînement.
